# EUROPEAN PATENT APPLICATION

(11) **EP 4 742 756 A1**
(43) Date of publication of application: **13.05.2026**
(21) Application number: 25208450.4
(22) Date of filing: 14.10.2025
(51) Int. Cl.: H04W 36/00, H04W 36/08, H04W 36/36, H04W 88/08, H04L 5/00

(54) **METHOD FOR EARLY CSI ACQUISITION FOR LTM SWITCHING**

(30) Priority: 07.11.2024 IN 202441085568
(71) Applicant: Nokia Technologies Oy, 02610 Espoo (FI)
(72) Inventor: SELVAGANAPATHY, Srinivasan, Bangalore (IN); GOYAL, Sanjay, Denville (US); ZHANG, Xin, Taufkirchen (DE); KOSKELA, Timo, Oulu (FI)
(74) Representative: Nokia EPO representatives

(57) **Abstract**

A method includes receiving, by a user equipment (UE), a radio resource control (RRC) reconfiguration message from a source control unit (CU), wherein the RRC reconfiguration message includes an L1/2 Triggered Mobility (LTM) candidate configuration and/or a list of reporting configuration identifiers for early CSI acquisition; transmitting, by the UE, an RRC reconfiguration request acknowledgment to the source CU; waiting, by the UE, for a cell switch command or MAC CE; performing, by the UE, a measurement on an associated channel state information reference signal (CSI-RS); and transmitting, by the UE, a report to a target DU using the candidate configuration.

## Description

### FIELD

Various example embodiments relate generally to wireless networking and, more particularly, to configuration for conditional lower-layer triggered mobility (LTM).

### BACKGROUND

Wireless networking provides significant advantages for user mobility. A user's ability to remain connected while on the move provides advantages not only for the user, but also provides greater efficiency and productivity for society as a whole. As user expectations for connection reliability, data speed, and device battery life become more demanding, technology for wireless networking must also keep pace with such expectations. Accordingly, there is continuing interest in improving wireless networking technology.

### SUMMARY

In accordance with aspects of the disclosure, a method, includes receiving, by a user equipment (UE), a radio resource control (RRC) reconfiguration message from a source control unit (CU), wherein the RRC reconfiguration message includes an L1/2 Triggered Mobility (LTM) candidate configuration and/or a list of reporting configuration identifiers for early CSI acquisition; transmitting, by the UE, an RRC reconfiguration request acknowledgment to the source CU; waiting, by the UE, for a cell switch command or MAC CE; performing, by the UE, a measurement on an associated channel state information reference signal (CSI-RS); and transmitting, by the UE, a report to a target DU using the candidate configuration.

In an aspect of the method, the LTM candidate configuration may include a parameter that binds the candidate TCI state to an LTM CSI acquisition report identifier.

In an aspect of the method, the method may further include autonomously triggering, by the UE, early measurements to the LTM candidate configuration.

In an aspect of the method, the method may further include, in a case where conditional LTM is configured, configuring the UE with an LTM CSI acquisition report identifier mapped to a synchronization signal block (SSB) and/or the candidate-TCI state.

In an aspect of the method, the method may further include triggering, by the UE, on execution of conditional LTM, a corresponding report based on a beam of a candidate cell falling within the configuration of the UE.

In an aspect of the method, the method may further include receiving, by the UE from a source DU, a semi-periodic report including a candidate identifier and a report identifier.

In an aspect of the method, the method may further include receiving, by the UE from a source DU, an LTM cell switch command (CSC) MAC CE including a report identifier.

In an aspect of the method, the method may further include decoding, by the UE, the corresponding target configuration based on receiving the report identifier in a cell switch command or MAC CE; and starting measurements, by the UE, based on a corresponding report configuration.

In an aspect of the method, the LTM candidate configuration may include mapping between a candidate-TCI state and an early report configuration that needs to be triggered when the candidate TCI state is activated.

In accordance with aspects of the disclosure, a user equipment (UE), includes at least one processor; and at least one memory storing instructions which, when executed by the at least one processor, causes the UE at least to perform a method as in any one of the foregoing methods.

In accordance with aspects of the disclosure, processor-readable medium storing instructions which, when executed by at least one processor of an apparatus, cause the apparatus at least to perform a method as in any one of the foregoing methods.

In accordance with aspects of the disclosure, a method, includes: transmitting to a source central unit (CU) by a target distributed unit (DU), an L1/2 Triggered Mobility (LTM) report configuration for triggering before cell-switching for early CSI acquisition for candidate cells of the target DU; transmitting, to a source DU by the source CU, a request to provide a report configuration for triggering before cell-switching for early CSI acquisition, wherein the report configurations are a set of distinct parameters from a CSI measurement configuration of a source DU.

In an aspect of the method, the report configuration provided by the source CU may include a second report configuration of a candidate cell.

In an aspect of the method, the report configuration may further include reporting resources of the candidate cell.

In an aspect of the method, a complete report configuration provided by the target DU may be added to a radio resource control (RRC) reconfiguration message.

In an aspect of the method, the report configuration may be provided by the target DU to the source CU, may be a complete report configuration, and wherein a radio resource control (RRC) reconfiguration message may include the complete report configuration.

In an aspect of the method, the LTM configuration may include a plurality of LTM candidates, wherein each LTM candidate may include an LTM CSI acquisition report.

In an aspect of the method, the source CU may transmit only the list of reporting configuration identifiers for early CSI acquisition, wherein the report configuration may be maintained with a candidate RRC.

In an aspect of the method, the method may further include transmitting by a source DCU, a radio resource control (RRC) reconfiguration message to a user equipment (UE), wherein the RRC message includes an LTM configuration including CSI acquisition report information.

In an aspect of the method, the method may further include triggering, by the target DU aperiodic or semi-persistent reporting using DCI signaling that carries at least one field associated with LTM CSI reporting, wherein at least one of the at least one field refers to a reporting configuration identifier associated with the reporting configuration; the at least one field is LTM specific field associated with LTM CSI acquisition; or the at least one field refers to the reporting configuration.

In accordance with aspects of the disclosure, an apparatus, includes: at least one processor; and at least one memory storing instructions which, when executed by the at least one processor, causes the apparatus at least to perform a method as in any one of the foregoing methods.

In accordance with aspects of the disclosure, a processor-readable medium storing instructions which, when executed by at least one processor of an apparatus, cause the apparatus at least to perform a method as in any one of the foregoing methods.

According to some aspects, there is provided the subject matter of the independent claims. Some further aspects are defined in the dependent claims.

### BRIEF DESCRIPTION OF THE DRAWINGS

Some example embodiments will now be described with reference to the accompanying drawings.
FIG. 1 is a diagram of an example embodiment of wireless networking between a network system and a user equipment (UE), according to one illustrated aspect of the disclosure;
FIG. 2 is a diagram of example components of a network system, according to one illustrated aspect of the disclosure;
FIG. 3 is a diagram of an example embodiment of signals and operations among a UE, a source distributed unit (DU 1), a central unit (CU), and a target DU (DU 2) according to one illustrated aspect of the disclosure; and
FIG. 4 is a diagram of an example block diagram of a wireless station or node (e.g., network node (such as gNodeB (gNB)), user node or UE, relay node, or other node), according to one illustrated aspect of the present disclosure.

### DETAILED DESCRIPTION

In the following description, certain specific details are set forth in order to provide a thorough understanding of the disclosed aspects. However, one skilled in the relevant art will recognize that aspects may be practiced without one or more of these specific details or with other methods, components, materials, etc. In other instances, well-known structures associated with transmitters, receivers, or transceivers have not been shown or described in detail to avoid unnecessarily obscuring descriptions of the aspects.

Reference throughout this specification to "one aspect" or "an aspect" means that a particular feature, structure, or characteristic described in connection with the aspect is included in at least one aspect. Thus, the appearances of the phrases "in one aspect" or "in an aspect" in various places throughout this specification are not necessarily all referring to the same aspect. Furthermore, the particular features, structures, or characteristics may be combined in any suitable manner in one or more aspects.

Embodiments described in the present disclosure may be implemented in wireless networking apparatuses, such as, without limitation, apparatuses utilizing Worldwide Interoperability for Microwave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, enhanced LTE (eLTE), 5G New Radio (5G NR), 5G Advance, 6G (and beyond) and 802.11ax (Wi-Fi 6), among other wireless networking systems. The term 'eLTE' here denotes the LTE evolution that connects to a 5G core. LTE is also known as evolved UMTS terrestrial radio access (EUTRA) or as evolved UMTS terrestrial radio access network (EUTRAN).

The present disclosure may use the term "serving network device" to refer to a network node or network device (or a portion thereof) that services a UE. As used herein, the terms "transmit to," "receive from," and "cooperate with," (and their variations) include communications that may or may not involve communications through one or more intermediate devices or nodes. The term "acquire" (and its variations) includes acquiring in the first instance or reacquiring after the first instance. The term "connection" may mean a physical connection or a logical connection.

The present disclosure uses 5G NR as an example of a wireless network and may use smartphones and/or extended reality headsets as an example of user equipments (UEs). It is intended and shall be understood that such examples are merely illustrative, and the present disclosure is applicable to other wireless networks and user equipment.

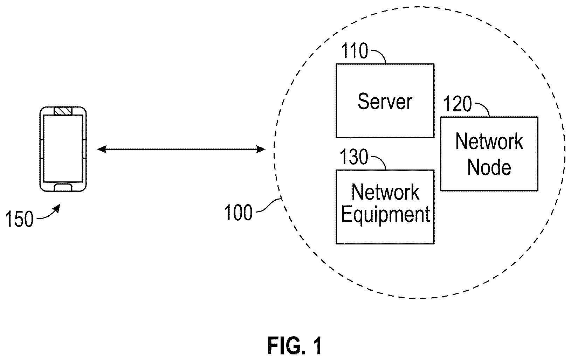

FIG. 1 is a diagram depicting an example of wireless networking between a network system 100 and a user equipment (UE) 150. The network system 100 may include one or more network nodes 120, one or more servers 110, and/or one or more network equipment 130 (e.g., test equipment). The network nodes 120 will be described in more detail below. As used herein, the term "network apparatus" may refer to any component of the network system 100, such as the server 110, the network node 120, the network equipment 130, any component(s) of the foregoing, and/or any other component(s) of the network system 100. Examples of network apparatuses include, without limitation, apparatuses implementing aspects of 5G NR, among others. The present disclosure describes embodiments related to 5G NR and embodiments that involve aspects defined by 3rd Generation Partnership Project (3GPP). However, it is contemplated that embodiments relating to other wireless networking technologies are encompassed within the scope of the present disclosure.

The following description provides further details of examples of network nodes. In a 5G NR network, a gNodeB (also known as gNB) may include, e.g., a node that provides new radio (NR) user plane and control plane protocol terminations towards the UE and that is connected via a NG interface to the 5G core (5GC), e.g., according to 3GPP TS 38.300 V16.6.0 (2021-06) section 3.2, which is hereby incorporated by reference herein.

A gNB supports various protocol layers, e.g., Layer 1 (L1) - physical layer, Layer 2 (L2), and Layer 3 (L3).

The layer 2 (L2) of NR is split into the following sublayers: Media Access Control (MAC), Radio Link Control (RLC), Packet Data Convergence Protocol (PDCP) and Service Data Adaptation Protocol (SDAP), where, e.g.:
∘ The physical layer offers to the MAC sublayer transport channels;
∘ The MAC sublayer offers to the RLC sublayer logical channels;
∘ The RLC sublayer offers to the PDCP sublayer RLC channels;
∘ The PDCP sublayer offers to the SDAP sublayer radio bearers;
∘ The SDAP sublayer offers to 5GC quality of service (QoS) flows;
∘ Control channels include broadcast control channel (BCCH) and physical control channel (PCCH).

Layer 3 (L3) includes, e.g., radio resource control (RRC), e.g., according to 3GPP TS 38.300 V16.6.0 (2021-06) section 6, which is hereby incorporated by reference herein.

A gNB central unit (gNB-CU) includes, e.g., a logical node hosting, e.g., radio resource control (RRC), service data adaptation protocol (SDAP), and packet data convergence protocol (PDCP) protocols of the gNB or RRC and PDCP protocols of the en-gNB, that controls the operation of one or more gNB distributed units (gNB-DUs). The gNB-CU terminates the F1 interface connected with the gNB-DU. A gNB-CU may also be referred to herein as a CU, a central unit, a centralized unit, or a control unit.

A gNB Distributed Unit (gNB-DU) includes, e.g., a logical node hosting, e.g., radio link control (RLC), media access control (MAC), and physical (PHY) layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU. A gNB-DU may also be referred to herein as DU or a distributed unit.

As used herein, the term "network node" may refer to any of a gNB, a gNB-CU, or a gNB-DU, or any combination of them. A RAN (radio access network) node or network node such as, e.g., a gNB, gNB-CU, or gNB-DU, or parts thereof, may be implemented using, e.g., an apparatus with at least one processor and/or at least one memory with processor-readable instructions ("program") configured to support and/or provision and/or process CU and/or DU related functionality and/or features, and/or at least one protocol (sub-)layer of a RAN (radio access network), e.g., layer 2 and/or layer 3. Different functional splits between the central and distributed units are possible. An example of such an apparatus and components will be described in connection with FIG. 5 below.

The gNB-CU and gNB-DU parts may, e.g., be co-located or physically separated. The gNB-DU may even be split further, e.g., into two parts, e.g., one including processing equipment and one including an antenna. A central unit (CU) may also be called baseband unit/radio equipment controller/cloud-RAN/virtual-RAN (BBU/REC/C-RAN/V-RAN), open-RAN (O-RAN), or part thereof. A distributed unit (DU) may also be called remote radio head/remote radio unit/radio equipment/radio unit (RRH/RRU/RE/RU), or part thereof. Hereinafter, in various example embodiments of the present disclosure, a network node, which supports at least one of central unit functionality or a layer 3 protocol of a radio access network, may be, e.g., a gNB-CU. Similarly, a network node, which supports at least one of distributed unit functionality or a layer 2 protocol of the radio access network, may be, e.g., a gNB-DU.

A gNB-CU may support one or multiple gNB-DUs. A gNB-DU may support one or multiple cells and, thus, could support a serving cell for a user equipment (UE) or support a candidate cell for handover, dual connectivity, and/or carrier aggregation, among other procedures.

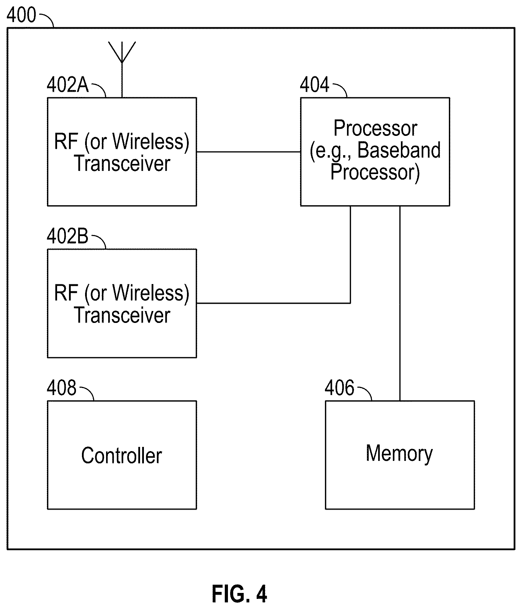

The user equipment (UE) 150 may be or include a wireless or mobile device, an apparatus with a radio interface to interact with a RAN (radio access network), a smartphone, an in-vehicle apparatus, an IoT device, or a machine-to-machine (M2M) device, among other types of user equipment. Such UE 150 may include: at least one processor; and at least one memory including program code; where the at least one memory and the computer program code are configured to, with the at least one processor, cause the apparatus at least to perform certain operations, such as, e.g., RRC connection to the RAN. An example of components of a UE will be described in connection with FIG. 4. In embodiments, the UE 150 may be configured to generate a message (e.g., including a cell ID) to be transmitted via radio towards a RAN (e.g., to reach and communicate with a serving cell). In embodiments, the UE 150 may generate and transmit and receive RRC messages containing one or more RRC PDUs (packet data units). Persons skilled in the art will understand RRC protocol as well as other procedures a UE may perform.

With continuing reference to FIG. 1, in the example of a 5G NR network, the network system 100 provides one or more cells, which define a coverage area of the network system 100. As described above, the network system 100 may include a gNB of a 5G NR network or may include any other apparatus configured to control radio communication and manage radio resources within a cell. As used herein, the term "resource" may refer to radio resources, such as a resource block (RB), a physical resource block (PRB), a radio frame, a subframe, a time slot, a sub-band, a frequency region, a sub-carrier, a beam, etc. In embodiments, the network node 120 may be called a base station.

FIG. 1 provides an example and is merely illustrative of a network system 100 and a UE 150. Persons skilled in the art will understand that the network system 100 includes components not illustrated in FIG. 1 and will understand that other user equipment may be in communication with the network system 100.

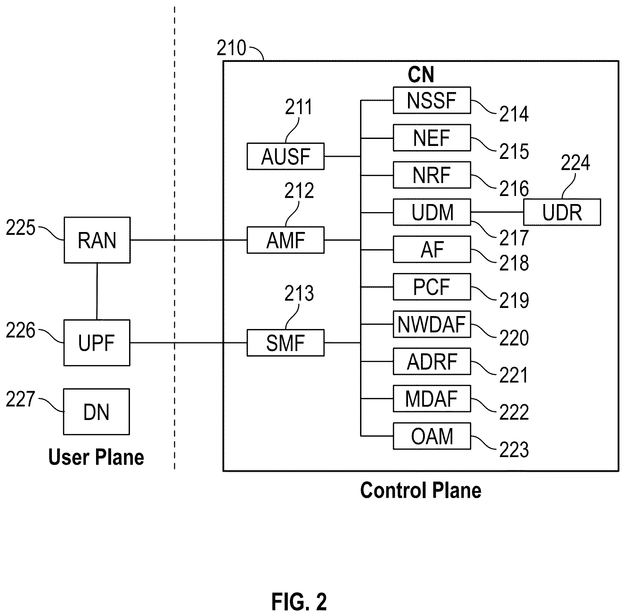

FIG. 2 is a block diagram of example components of the network system 100 of FIG. 1. A 5G NR network may be described as an example of the network system 100, and it is intended that aspects of the following description shall be applicable to other types of network systems, as well. The network system may operate in accordance with the signals and connections shown in FIG. 1 such that the UE 150 is in communication with the network system 100 through the radio access network 225. Additionally, the network system may be divided into user plane components and functions and control plane components and functions, as shown and described herein. Unless indicated otherwise, the terms "component," "function," and "service" may be used interchangeably herein, and they may refer to and be implemented by instructions executed by one or more processors.

Example functions of the components are described below. The example functions are merely illustrative, and it shall be understood that additional operations and functions may be performed by the components described herein. Additionally, the connections between components may be virtual connections over service-based interfaces such that any component may communicate with any other component. In this manner, any component may act as a service "producer," for any other component that is a service "consumer," to provide services for network functions.

FIG. 2 is merely an example of components of a network system, and variations are contemplated to be within the scope of the present disclosure. In embodiments, the network system may include other components not illustrated in FIG. 2. In embodiments, the network system may not include every component illustrated in FIG. 2. In embodiments, the components and connections may be implemented with different connections than those illustrated in FIG. 2. Such and other embodiments are contemplated to be within the scope of the present disclosure.

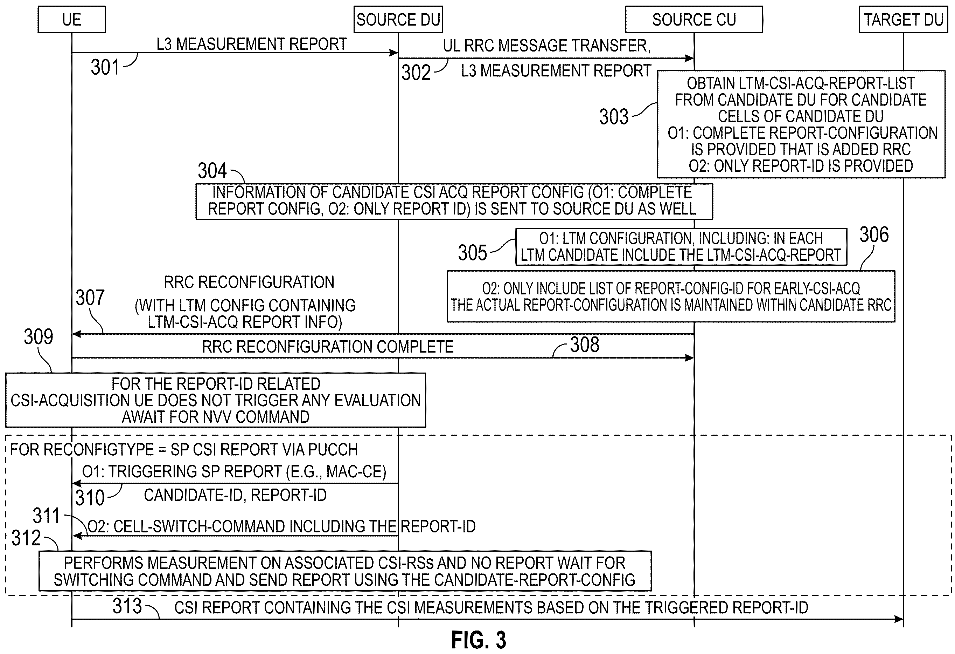

FIG. 3 is a diagram of an example embodiment of signals and operations among a UE, a source distributed unit (DU 1), a central unit (CU), and a target DU (DU 2) according to one illustrated aspect of the disclosure. In other embodiments, the source and the target DU can be the same entity. In various embodiments, FIG. 3 shows an example method of early CSI acquisition for LTM switching according to one illustrated aspect of the disclosure. In various embodiments, the components depicted in FIG. 3 may correspond to similar components described above in FIGS. 1 and 2. It will be understood that a described signal may have associated operations, and a described operation may have associated signals.

The disclosure provides the benefit of specifying CSI acquisition on candidate cells based on CSI-RS before or during L1/2 Triggered Mobility (LTM) cell switch. As used herein, CSI acquisition includes acquiring the channel parameters, such as Channel Quality Indicator (CQI), precoding matrix indicator (PMI), layer indicator (LI), rank indicator (RI), which are used to set the appropriate modulation & coding rate, appropriate MIMO configuration (e.g., number of layers, precoding matrix) of the channel.

Typically, L1 measurements are triggered by providing and/or activating a report configuration that contains information related to measurement RSs and UL resources for reporting. The disclosure enables the reporting of CSI acquisition measurements for CSI-RSs of the target cell, which may be triggered by the serving cell are sent directly to the target cell (after/during the cell switch). Since reporting is done to the target cell, the UL resources need to be provided to the UE. Therefore, a report configuration that makes use of uplink resources in the candidate cells (potential cells for the target cell) may be triggered from the current serving cell, which allows UE to make measurements and report directly to the candidate cell (or the target cell). Mechanisms and appropriate configuration are needed to enable such a procedure.

At operation 301, the UE transmits an L3 measurement report to the source distributed unit (DU). The L3 measurement report may include beam level measurement results on cell(s) that are configured as LTM candidate cell(s) according to the received network configuration.

At operation 302, the source DU transmits the uplink (UL) radio resource control (RRC) reconfiguration message and the L3 measurement report to a source central unit (CU).

At operation 303, a target distributed unit (DU) transmits to the source CU an LTM report configuration for triggering before cell switching for early CSI acquisition for candidate cells of the target DU. The target DU may include a plurality of candidate cells. A complete report configuration provided by the target DU may be added to a radio resource control (RRC) reconfiguration message. The report configuration may be provided by the target DU to the source CU may be a complete report configuration. The RRC reconfiguration message may include the complete report configuration.

At operation 304, the source CU transmits, to a source DU, a request to provide a report configuration for triggering before cell-switching for early CSI acquisition, wherein the report configurations are a set of distinct parameters from a CSI measurement configuration of a source DU. This enables starting CSI-RS measurement before the reception of LTM CSC MAC CE and performing the CSI reporting operation after the reception of LTM CSC MAC CE.

At operation 305, the LTM configuration may include a plurality of LTM candidates. In aspects, each LTM candidate may include an LTM CSI acquisition report.

In the case of conditional LTM, the LTM candidate configuration may include a parameter that binds the candidate TCI state to an LTM CSI acquisition report identifier. In this case, UE can autonomously trigger the early measurements to the bound report configuration, and no additional MAC CE or changes in the switching command are needed. In a case where conditional LTM is configured, the UE may be configured with an LTM CSI acquisition report identifier mapped to a synchronization signal block (SSB) and/or the candidate-TCI state. In aspects, on the execution of conditional LTM, the UE may trigger a corresponding report based on a beam of a candidate cell falling within the configuration of the UE.

At operation 306, the source CU may transmit only a list of reporting configuration identifiers for early CSI acquisition. The report configuration may be maintained with a candidate RRC. This enables the performance of CSI-RS measurement and CSI reporting operations after the reception of LTM CSC MAC CE.

At operation 307, the source CU transmits an RRC reconfiguration message to a user equipment (UE). The RRC reconfiguration message includes an LTM configuration that includes CSI acquisition report information.

At operation 308, the UE transmits an RRC reconfiguration complete message to the source CU.

At operation 309, for the report identification related CSI acquisition, the UE does not trigger any evaluation and awaits a network cell switch command.

At operation 310, the UE may receive from a source DU, a semi-periodic report that includes a candidate identifier and a report identifier.

At operation 311, the UE may receive, from a source DU, an LTM cell switch command (CSC) MAC CE that includes a report identifier. On receiving the report identifier in the cell switch command or MAC CE, the UE decodes the corresponding target configuration and starts measurements based on the corresponding report configuration.

At operation 312, the UE performs measurement on associated CSI-RSs and transmits the report to the source CU using the candidate report configuration.

In aspects, the target DU may trigger aperiodic or semi-periodic reporting using DCI signaling that carries at least one field associated with LTM CSI reporting. In aspects, the at least one field refers to a reporting configuration identifier associated with the reporting configuration. In aspects, the at least one field is an LTM-specific field associated with LTM CSI acquisition. In aspects, the at least one field refers to the reporting configuration.

At operation 313, the UE transmits to the target DU a CSI report containing the CSI measurements based on the triggered report identifier.

In aspects, for subsequent LTM, each candidate DU may also be provided with the information on the report configurations for early CSI acquisition of serving and other candidate DUs.

The operations of FIG. 3 are merely illustrative, and variations are contemplated to be within the scope of the present disclosure. In embodiments, the operations may include other operations not illustrated in FIG. 3. In embodiments, the operations may be implemented in a different order than that illustrated in FIG. 3. Such and other embodiments are contemplated to be within the scope of the present disclosure. Persons of skill in the art will appreciate that, although various example components are described as performing various functions, other components may perform those functions described in FIG. 3.

The following describes operations from the perspective of a UE. From such a perspective, a method may include: receiving, by a user equipment (UE), a radio resource control (RRC) reconfiguration message from a source control unit (CU), wherein the RRC reconfiguration message includes an L1/2 Triggered Mobility (LTM) candidate configuration and/or a list of reporting configuration identifiers for early CSI acquisition; transmitting, by the UE, an RRC reconfiguration request acknowledgment to the source CU; waiting, by the UE, for a cell switch command or MAC CE; performing, by the UE, a measurement on an associated channel state information reference signal (CSI-RS); and transmitting, by the UE, a report to a target DU using the candidate configuration.

FIG. 4 is a block diagram of a wireless station or node (e.g., UE, user device, AP, BS, eNB, gNB, RAN node, network node, TRP, or other node) 400, according to one illustrated aspect of the present disclosure. The wireless station 400 may include, for example, one or more (e.g., two as shown in FIG. 4) RF (radio frequency) or wireless transceivers 402A, 402B, where each wireless transceiver includes a transmitter to transmit signals and a receiver to receive signals. The wireless station also includes a processor or control unit/entity (controller) 404 to execute instructions or software and control transmission and receptions of signals, and a memory 406 to store data and/or instructions.

Processor 404 may also make decisions or determinations, generate frames, packets or messages for transmission, decode received frames or messages for further processing, and other tasks or functions described herein. Processor 404, which may be a baseband processor, for example, may generate messages, packets, frames, or other signals for transmission via wireless transceiver 402 (402A or 402B). Processor 404 may control transmission of signals or messages over a wireless network and may control the reception of signals or messages, etc., via a wireless network (e.g., after being down-converted by wireless transceiver 402, for example). Processor 404 may be programmable and capable of executing software or other instructions stored in memory or on other computer media to perform the various tasks and functions described above, such as one or more of the tasks or methods described above. Processor 404 may be (or may include), for example, hardware, programmable logic, a programmable processor that executes software or firmware, and/or any combination of these. Using other terminology, processor 404 and transceiver 402 together may be considered as a wireless transmitter/receiver system, for example.

In addition, referring to FIG. 4, a controller (or processor) 408 may execute software and instructions, and may provide overall control for the station 400, and may provide control for other systems not shown in FIG. 4, such as controlling input/output devices (e.g., display, keypad), and/or may execute software for one or more applications that may be provided on wireless station 400, such as, for example, an email program, audio/video applications, a word processor, a Voice over IP application, or other application or software.

In addition, a storage medium may be provided that includes stored instructions, which when executed by a controller or processor may result in the processor 404, or other controller or processor, performing one or more of the functions or tasks described above.

According to another example embodiment, RF or wireless transceiver(s) 402A/402B may receive signals or data and/or transmit or send signals or data. Processor 404 (and possibly transceivers 402A/402B) may control the RF or wireless transceiver 402A or 402B to receive, send, broadcast or transmit signals or data.

Example embodiments are provided or described for each of the example methods, including: An apparatus (e.g., 400, FIG. 4) including means (e.g., processor 404, RF transceivers 402A and/or 402B, and/or memory 406, in FIG. 4) for carrying out any of the methods; a non-transitory computer-readable storage medium (e.g., memory 406, FIG. 4) comprising instructions stored thereon that, when executed by at least one processor (processor 404, FIG. 4), are configured to cause a computing system (e.g., 400, FIG. 4) to perform any of the example methods; and an apparatus (e.g., 400, FIG. 4) including at least one processor (e.g., processor 404, FIG. 4), and at least one memory (e.g., memory 406, FIG. 4) including computer program code, the at least one memory (406) and the computer program code configured to, with the at least one processor (404), cause the apparatus (e.g., 400) at least to perform any of the example methods.

Further embodiments of the present disclosure include the following examples.

Example 1.1. A user equipment (UE), comprising:
means for receiving, by a user equipment (UE), a radio resource control (RRC) reconfiguration message from a source control unit (CU), wherein the RRC reconfiguration message includes an L1/2 Triggered Mobility (LTM) candidate configuration and/or a list of reporting configuration identifiers for early CSI acquisition;
means for transmitting, by the UE, an RRC reconfiguration request acknowledgment to the source CU;
means for waiting, by the UE, for a cell switch command or MAC CE;
means for performing, by the UE, a measurement on an associated channel state information reference signal (CSI-RS); and
means for transmitting, by the UE, a report to a target DU using the candidate configuration.

Example 1.2. The UE of Example 1.1, wherein the LTM candidate configuration includes a parameter that binds the candidate TCI state to an LTM CSI acquisition report identifier.

Example 1.3. The UE of Example 1.2, further comprising:
means for autonomously triggering, by the UE, early measurements to the LTM candidate configuration.

Example 1.4 The UE of Example 1.1, further comprising:
means for, in a case where conditional LTM is configured, configuring the UE with an LTM CSI acquisition report identifier mapped to a synchronization signal block (SSB) and/or the candidate-TCI state.

Example 1.5. The UE of Example 1.4, further comprising:
means for triggering by the UE, on execution of conditional LTM, a corresponding report based on a beam of a candidate cell falling within the configuration of the UE.

Example 1.6. The UE of Example 1.1, further comprising:
means for receiving, by the UE from a source DU, a semi-periodic report including a candidate identifier and a report identifier.

Example 1.7. The UE of Example 1.1, further comprising:
means for receiving, by the UE from a source DU, an LTM cell switch command (CSC) MAC CE including a report identifier.

Example 1.8. The UE of Example 1.7, further comprising:
means for decoding, by the UE, the corresponding target configuration based on receiving the report identifier in a cell switch command or MAC CE; and
means for starting measurements, by the UE, based on a corresponding report configuration.

Example 1.9. The UE of Example 1.1, wherein the LTM candidate configuration includes:
means for mapping between a candidate-TCI state and an early report configuration that needs to be triggered when the candidate TCI state is activated

Example 1.12. A network apparatus, comprising:
means for transmitting to a source central unit (CU) by a target distributed unit (DU), an L1/2 Triggered Mobility (LTM) report configuration for triggering before cell-switching for early CSI acquisition for candidate cells of the target DU
means for transmitting, to a source DU by the source CU, a request to provide a report configuration for triggering before cell-switching for early CSI acquisition, wherein the report configurations are a set of distinct parameters from a CSI measurement configuration of a source DU.

Example 1.13. The network apparatus of Example 1.12, wherein the report configuration provided by the source CU includes a second report configuration of a candidate cell.

Example 1.14. The network apparatus of Example 1.12, wherein the report configuration further includes reporting resources of the candidate cell.

Example 1.15. The network apparatus of Example 1.12, wherein a complete report configuration provided by the target DU is added to a radio resource control (RRC) reconfiguration message.

Example 1.16. The network apparatus of Example 1.12, wherein the report configuration is provided by the target DU to the source CU, is a complete report configuration, and
wherein a radio resource control (RRC) reconfiguration message includes the complete report configuration.

Example 1.17. The network apparatus of Example 1.12, wherein the LTM configuration includes a plurality of LTM candidates, wherein each LTM candidate includes an LTM CSI acquisition report.

Example 1.18. The network apparatus of Example 1.12, wherein the source CU transmits only the list of reporting configuration identifiers for early CSI acquisition, wherein the report configuration is maintained with a candidate RRC.

Example 1.19. The network apparatus of Example 1.12, further comprising:
means for transmitting by a source DCU, a radio resource control (RRC) reconfiguration message to a user equipment (UE), wherein the RRC message includes an LTM configuration including CSI acquisition report information.

Example 1.20. The network apparatus of Example 1.12, further comprising:
means for triggering, by the target DU aperiodic or semi-persistent reporting using DCI signaling that carries at least one field associated with LTM CSI reporting, wherein at least one of:
the at least one field refers to a reporting configuration identifier associated with the reporting configuration;
the at least one field is LTM specific field associated with LTM CSI acquisition; or
the at least one field refers to the reporting configuration.

The embodiments and aspects disclosed herein are examples of the present disclosure and may be embodied in various forms. For instance, although certain embodiments herein are described as separate embodiments, each of the embodiments herein may be combined with one or more of the other embodiments herein. Specific structural and functional details disclosed herein are not to be interpreted as limiting, but as a basis for the claims and as a representative basis for teaching one skilled in the art to variously employ the present disclosure in virtually any appropriately detailed structure. Like reference numerals may refer to similar or identical elements throughout the description of the figures.

The phrases "in an aspect," "in aspects," "in various aspects," "in some aspects," or "in other aspects" may each refer to one or more of the same or different aspects in accordance with this present disclosure. The phrase "a plurality of" may refer to two or more.

In various embodiments, the terms "first message" and "second message," as well as any subsequent messages may refer to any messages that are transmitted or received in an order and are not necessarily limited to any particular message.

The phrases "in an embodiment," "in embodiments," "in various embodiments," "in some embodiments," or "in other embodiments" may each refer to one or more of the same or different embodiments in accordance with the present disclosure. A phrase in the form "A or B" means "(A), (B), or (A and B)." A phrase in the form "at least one of A, B, or C" means "(A); (B); (C); (A and B); (A and C); (B and C); or (A, B, and C)."

Any of the herein described methods, programs, algorithms or codes may be converted to, or expressed in, a programming language or computer program. The terms "programming language" and "computer program," as used herein, each include any language used to specify instructions to a computer, and include (but is not limited to) the following languages and their derivatives: Assembler, Basic, Batch files, BCPL, C, C+, C++, Delphi, Fortran, Java, JavaScript, machine code, operating system command languages, Pascal, Perl, PL1, Python, scripting languages, Visual Basic, metalanguages which themselves specify programs, and all first, second, third, fourth, fifth, or further generation computer languages. Also included are database and other data schemas, and any other meta-languages. No distinction is made between languages which are interpreted, compiled, or use both compiled and interpreted approaches. No distinction is made between compiled and source versions of a program. Thus, reference to a program, where the programming language could exist in more than one state (such as source, compiled, object, or linked) is a reference to any and all such states. Reference to a program may encompass the actual instructions and/or the intent of those instructions.

While aspects of the present disclosure have been shown in the drawings, it is not intended that the present disclosure be limited thereto, as it is intended that the present disclosure be as broad in scope as the art will allow and that the specification be read likewise. Therefore, the above description should not be construed as limiting, but merely as exemplifications of particular aspects. Those skilled in the art will envision other modifications within the scope and spirit of the claims appended hereto.

## Claims

1. A method, comprising:
receiving, by a user equipment (UE), a radio resource control (RRC) reconfiguration message from a source control unit (CU), wherein the RRC reconfiguration message includes an L1/2 Triggered Mobility (LTM) candidate configuration and/or a list of reporting configuration identifiers for early CSI acquisition;
transmitting, by the UE, an RRC reconfiguration request acknowledgment to the source CU;
waiting, by the UE, for a cell switch command or MAC CE;
performing, by the UE, a measurement on an associated channel state information reference signal (CSI-RS); and
transmitting, by the UE, a report to a target DU using the candidate configuration.

2. The method of claim 1, wherein the LTM candidate configuration includes a parameter that binds a candidate TCI state to an LTM CSI acquisition report identifier.

3. The method of claim 1 or claim 2, further comprising:
autonomously triggering, by the UE, early measurements to the LTM candidate configuration.

4. The method of claim 1 or claim 2, further comprising:
in a case where conditional LTM is configured, configuring the UE with an LTM CSI acquisition report identifier mapped to a synchronization signal block (SSB) and/or a candidate-TCI state.

5. The method of claim 4, further comprising:
triggering, by the UE, on execution of conditional LTM, a corresponding report based on a beam of a candidate cell falling within the configuration of the UE.

6. The method of any of claims 1 to 5, further comprising:
receiving, by the UE from a source DU, a semi-periodic report including a candidate identifier and a report identifier.

7. The method of claim 1, further comprising:
receiving, by the UE from a source DU, an LTM cell switch command (CSC) MAC CE including a report identifier.

8. The method of claim 7, further comprising:
decoding, by the UE, the corresponding target configuration based on receiving the report identifier in a cell switch command or MAC CE; and
starting measurements, by the UE, based on a corresponding report configuration.

9. The method of claim 1, wherein the LTM candidate configuration includes:
mapping between a candidate-TCI state and an early report configuration that needs to be triggered when the candidate TCI state is activated.

10. A user equipment (UE), comprising:
at least one processor; and
at least one memory storing instructions which, when executed by the at least one processor, causes the UE at least to:
receive a radio resource control (RRC) reconfiguration message from a source control unit (CU), wherein the RRC reconfiguration message includes an L1/2 Triggered Mobility (LTM) candidate configuration and/or a list of reporting configuration identifiers for early CSI acquisition;
transmit an RRC reconfiguration request acknowledgment to the source CU;
wait for a cell switch command or MAC CE;
performing a measurement on an associated channel state information reference signal (CSI-RS); and
transmit a report to a target DU using the candidate configuration.

11. A method, comprising:
receiving, at a source central unit (CU) from a target distributed unit (DU), an L1/2 Triggered Mobility (LTM) report configuration for triggering before cell-switching for early CSI acquisition for candidate cells of the target DU; and
transmitting, to a source DU by the source CU, a request to provide a report configuration for triggering before cell-switching for early CSI acquisition, wherein the report configurations are a set of distinct parameters from a CSI measurement configuration of a source DU.

12. An apparatus, comprising:
at least one processor; and
at least one memory storing instructions which, when executed by the at least one processor, causes the apparatus at least to:
receive, from a target distributed unit (DU), an L1/2 Triggered Mobility (LTM) report configuration for triggering before cell-switching for early CSI acquisition for candidate cells of the target DU; and
transmit, to a source DU, a request to provide a report configuration for triggering before cell-switching for early CSI acquisition, wherein the report configurations are a set of distinct parameters from a CSI measurement configuration of a source DU.
